# EUROPÄISCHE PATENTSCHRIFT

(11) **EP 2 710 889 B1**
(45) Veröffentlichungstag und Bekanntmachung des Hinweises auf die Patenterteilung: **14.11.2018**
(21) Anmeldenummer: 13183892.2
(22) Anmeldetag: 11.09.2013
(51) Int. Cl.: A01J 25/13

(54) **Käseform**
Cheese mould
Moule à fromage

(30) Priorität: 21.09.2012 CH 17122012
(43) Veröffentlichungstag der Anmeldung: 26.03.2014
(73) Patentinhaber: Kalt Maschinenbau AG, 9604 Lütisburg (CH)
(72) Erfinder: Waldburger, Peter, 9246 Niederbüren (CH)
(74) Vertreter: Frommhold, Joachim

(56) Entgegenhaltungen:
- DE-A1- 2 823 182
- GB-A- 951 746
- US-B1- 7 757 876

## Beschreibung

Die Erfindung betrifft eine Käseform, insbesondere eine Käseform aus Kunststoff oder Metall mit einem runden oder mehreckigen Querschnitt, zur Anordnung in einer Kassettenpresse oder dergleichen.
Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Formen, ein Säulengestell zur Anordnung eines heb- und senkbaren Presskopfes und eines Verteilkopfes zur Zuführung und Dosierung der Käserohmasse in die Formen und einen, auf der Wanne verfahrbaren Portalwagen zur Führung des Verteilkopfes und zur Handhabung eines Wendemechanismus für die Formen. Verteilkopf wie Wendemechanismus müssen dabei manuell bereitgestellt resp. gewechselt werden. Die Wandung der Form besteht aus einem Lochblech und mehrere Formen können in Sätzen angeordnet sein. An den Endflächen eines Satzes sind zylindrische Zapfen zum andocken einer Handhabungseinrichtung vorgesehen.
Die EP-A-406899 zeigt eine Weiterbildung einer solchen Vorrichtung, bei der die Formen in Kassetten aufgenommen sind, die wiederum kompakt und reihenartig in der Wanne angeordnet sind. Oberhalb der Formen ist ein Presskopf mit auf die Formen ausgerichteten Pressstempeln zum Pressen der Käserohmasse vorgesehen.

Die eigentliche Pressform ist dabei von einem topfförmigen Mantel mit einem Luftzufuhrkanal umgeben (EP-B-1269832). Dadurch wird ein Luftkanal gebildet und durch die zugeführte Luft kann die an den Sieblöchern des Lochblechs der Form anhaftende Käsemasse nach dem Pressen von der Jerbseite gelöst werden.
Eine weitere Käseform mit einer perforierten Formwand aus Metall ist in der DE-B-1030612 offenbart. Diese Formwand weist an ihrer inneren Oberfläche gleichmässig verteilte, niedrige Erhöhungen und Vertiefungen bis ca.1 mm auf, die die Käserinde bei Entnahme des Käselaibs nicht beschädigen sollen, selbst wenn der Käse aus der Form geschlagen wird. Eine solche Käseform mit perforierter Wandung kann nach DE-C-2823182 auch aus Kunststoff bestehen, an deren Innenseite zueinander parallele Riefen mit dreieckigem Querschnitt vorgesehen sind. Im Übergangs- und einteiligen Bodenbereich sind die Riefen durch Rippen mit Unterbrechungen getrennt. Derartige Formwände oder Doppelböden sind aufwändig in der Reinigung.
Ein mehrfunktionaler Behälter für Falthüllen (DE-A-19613068) weist eine auf den Falthüllen liegende Abschlussplatte auf, die mit Rippen verstärkt ist. Die Unterseite des Behälterbodens ist mit gewellten Rippen versehen. Ein Zusammenhang mit Käseformen besteht jedoch nicht.

Weiterhin bekannt ist ein zerlegbaren, eckigen Container aus Kunststoff gemäss US 7757876 B1, der auch als Form für Käse geeignet sein soll.

Der Container umfasst einen Boden und einen Mantel, wobei der Boden unterseitig mit einer Rippenstruktur versehen ist, wobei der Boden auch einen erhöhten Rand aufweisen kann.

Der Erfindung liegt die Aufgabe zugrunde, eine Käseform, insbesondere eine Käseform aus Metall oder Kunststoff zur Anordnung in einer Kassettenpresse oder dergleichen zu entwickeln, die einfach aufgebaut ist und einerseits dem Pressdruck standhält und andererseits auch hohen hygienischen Anforderungen genügt.

Die Aufgabe ist mit den Merkmalen des Patentanspruchs 1 gelöst.

Die Wandung der Käseform ist einteilig und im Übergangs- und Bodenbereich an der äusseren Wand mit einer Rippenstruktur versehen.

Bei einer runden Form erstrecken sich Längsrippen radial, von der Längsachse ausgehend über den Boden und fortgesetzt als Mantelrippen bis in den Bereich der Mantelwand, während bei rechteckigen Käseformen Rippen zumindest parallel zueinander angeordnet sind.

Die Längsrippen sind im Bodenbereich mit Ringen verbunden, wobei mehrere Ringe mit unterschiedlichen Durchmessern und beabstandet voneinander vorgesehen sind.

Die Festigkeit und Stabilität der Käseform werden erhöht, der Boden ist visuell kontrollierbar, insbesondere bzgl. Hygiene und Reinigung. Die bisher übliche Doppelwand des Bodens kann dadurch entfallen, was es auch ermöglicht, auf das einblasen von Luft zur Ablösung des Käselaibs zu verzichten.

Bevorzugte Ausgestaltungen sind in den abhängigen Ansprüchen offenbart. Die Rippenstruktur ist auf runde wie eckige Formen anwendbar, mit entsprechenden Adaptionen.

Bei runden Käseformen erstrecken sich einzelne Rippen bevorzugt strahlenförmig bzw. radial von der Längsachse der Käseform ausgehend über den Boden bis in den Bereich der Mantelwand oder auch bis zum oberen Rand der Mantelwand. Bevorzugt werden die Rippen im Bodenbereich durch ringförmig angeordnete Querrippen, wobei mehrere Ringe mit unterschiedlichen Durchmessern beabstandet voneinander vorgesehen sein können.
Bei rechteckigen Käseformen sind Rippen zumindest parallel zueinander angeordnet, wobei quer dazu weitere, ebenfalls parallel zueinander angeordnete Querrippen vorgesehen sein können.
Die Rippen sind so dimensioniert, dass die Aussenmasse bestehender Kassetten für die Aufnahmen von Käseformen unverändert bleiben können.

Zumindest der Mantel der Käseform besteht aus einem Lochblech, das zudem am oberen Randbereich einen Molkerand mit einer gröberen Lochung aufweisen kann.

Die Erfindung wird nachfolgend in einem Ausführungsbeispiel näher beschrieben. In der Zeichnung zeigen die
Fig. 1: eine erfindungsgemässe runde Käseform,
Fig. 2: eine runde Käseform in einer Kassette (Ausschnitt),

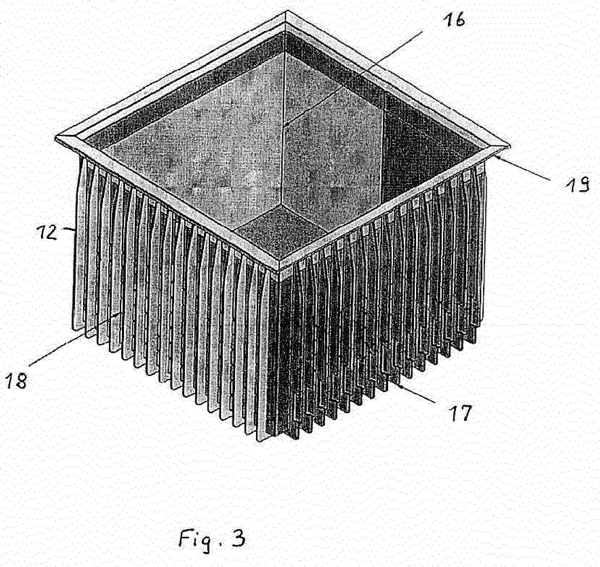

Fig. 3: eine erfindungsgemässe rechteckige Käseform,
Fig. 4: einen Pressdeckel für eine Käseform nach Fig. 1.

Erfindungsgemässe Formen 1, 12 (Käseformen) aus Metall, insbesondere einem rostfreien Stahl gelangen in bekannten Kassettenpressen zum Einsatz. Eine solche Kassettenpresse dient in an sich bekannter Weise dem flüssigkeitsverringernden Pressen von Käserohmasse und umfasst
- eine in der Draufsicht rechteckige und oben offene Wanne mit in der Draufsicht rechteckigen, oben offenen Kassetten, die in Reihen quer zur Längsrichtung der Wanne nebeneinander angeordnet sind,
- rund oder eckige Formen 1, 12 zur Aufnahme der zu pressenden Käserohmasse, die in den Kassetten 6 angeordnet sind, und zumindest einen Boden 5 und einen Mantel 4 mit mindestens einem Auslass für die abzupressende Flüssigkeit aufweisen, wobei eine Kassette 6 mindestens eine Form 1, 12 umfasst und zumindest der Boden 5 der Form 1, 12 mit einer Rippenstruktur 2 versehen ist, und wobei eine Form 1, 12 Teil der Kassette 6 sein kann,
- einen, auf Endsäulen gelagerten Presskopf mit einer Vielzahl, auf die Formen 1 ausgerichteten Pressstempel zum Pressen der Käserohmasse, z. B. entsprechend der Offenbarung der EP-B-543899 ausgebildet, sowie ggf. Niederhalter zum abdrücken des Presskopfes von den Kassetten,
- ein Rohrverteilsystem resp. einen Abfüllapparat zum Einschwemmen der Käserohmasse in die Formen 1, 12,
- mindestens eine Handhabungseinrichtung, die entlang der Längsseiten der Wanne verfahrbar ist, zum anheben, verfahren zu und ablegen einer Kassetten 6 auf einer Fördereinrichtung ausserhalb der Wanne,
- eine Einrichtung zum drehen/wenden der Kassette 6 bzw. Kassettenreihe um deren Längsachse.
Bevorzugt kann der Kassettenpresse weiterhin ein, oberhalb der Fördereinrichtung horizontal angeordneter und federnd gelagerter Rüttler in Form eines Spannrahmens zur Aufnahme einer Kassette 6 zugeordnet sein, der mit Unwuchtmotoren versehen ist. Erst nach einer Rüttelung werden die Käselaibe auf die Fördereinrichtung entleert.

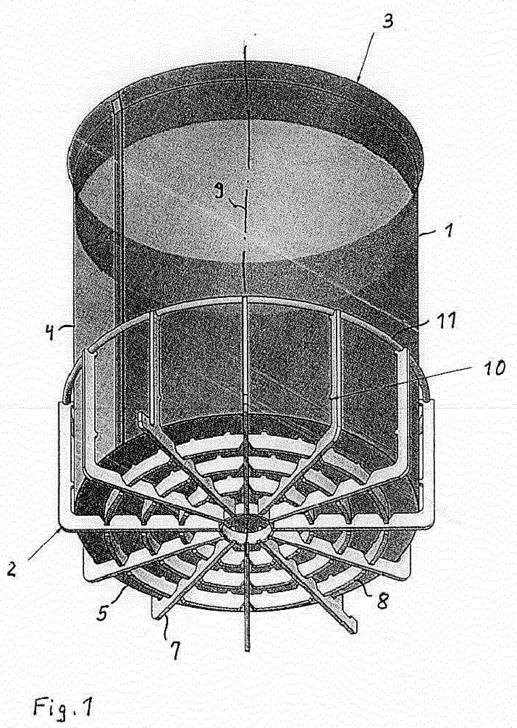

Eine runde Form 1 gemäss Fig. 1 umfasst einen zylindischen Mantel 4 mit einem oberen Korb 3 und einen Boden 5, der bis in den Übergangsbereich der äusseren Mantelwand hinein mit einer Rippenstruktur 2 versehen ist.
Längsrippen 7 erstrecken sich radial, von der Längsachse 9 ausgehend über den Boden 5 und fortgesetzt als Mantelrippen 10 bis in den Bereich der Mantelwand. Die Enden der Mantelrippen 10 sind mit einem Mantelring 11 verschweisst. Die Längsrippen 7 sind im Bodenbereich mit Ringen 8 stoff- und/oder formschlüssig verbunden, wobei mehrere Ringe 8 mit unterschiedlichen Durchmessern, beabstandet voneinander vorgesehen sind. Ein innerer Ring 8 begrenzt die Ausdehnung der Längsrippen 7 zur Längsachse 9 hin.

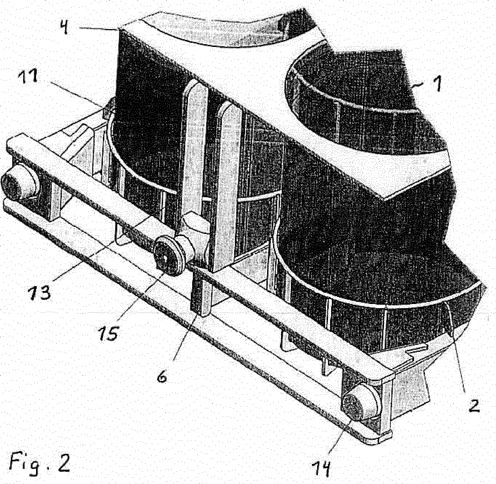

Die einzelnen Formen 1 werden in an sich bekannter Weise im Bodenbereich von Kassetten 6 (Fig. 2) angeordnet. Eine Kassette 6 besteht zumindest aus einem Rahmen, der aus Streben 13, an denen Antriebszentrierzapfen 15 zum aufnehmen und wenden der Kassette 6 sowie Zentrierzapfen 14 für die Wanne resp. den Spannrahmen vorgesehen sind.

Rechteckige Formen 12 weisen hingegen Längs- und Mantelrippen 17, 18 auf, die bevorzugt parallel zueinander angeordnet sind, wobei quer dazu weitere, ebenfalls parallel zueinander angeordnete Längs- und Mantelrippen 17, 18 vorgesehen sind.

Die Mantelrippen 18 können bis zu einem, den oberen Rand des Mantels 16 bildenden Korb 19 reichen. Die Form 12 kann aber auch ohne Korb 19 ausgebildet sein.

Bei runden wie eckigen Formen 1, 12 können die Rippen mittels Punktschweissung mit dem Mantel und Boden verbunden sein. Hierzu weisen die Rippen dann vorstehende Nasen auf und an jeder Nase wird punktgeschweisst. Trotz des einteiligen Bodens und Mantels weisen die Formen eine hohe Festigkeit, insbesondere zur Aufnahme der Presskräfte auf.
Die Rippen sind so dimensioniert, dass die Aussenmasse bestehender Kassetten für die Aufnahmen von Formen unverändert bleiben können.

Zumindest der Mantel 4, 16 der Käseform besteht aus einem Lochblech. Die Lochung muss der Bedingung genügen, dass der Molkeabfluss geringer sein muss als der Zufluss an Käserohmasse. Nur so ist gewährleistet, dass sich der Käsebruch immer unterhalb des Molkespiegels befindet. Nur so können Lufteinschlüsse (Blindeinschüsse) im Käse vermieden werden.
Für hoch zu pressenden Käse, d. h. Hartkäse besteht die Mantelwand und ggf. auch der Boden aus Feinlochblech Conidur®. Infolge der spezifischen Lochung kann die Bildung von "Haaren" vermieden werden, wie sie bei Kunststoffformen oder normalen, dickeren Lochblechen auftritt.
Bei der Abpressung von Weichkäse oder Halbhartkäse kann hingegen eine konventionelle Lochung ausreichend sein.
Das Lochblech kann unterhalb des Korbs 3 einen Molkerand 20 mit einer gröberen Lochung als der übrige Mantel 4, 16 aufweisen, insbesondere bei der Herstellung von Hartkäse. Bei weicherem Käse ist eine unterschiedliche Lochung des Mantels 4, 16 nicht zwingend.

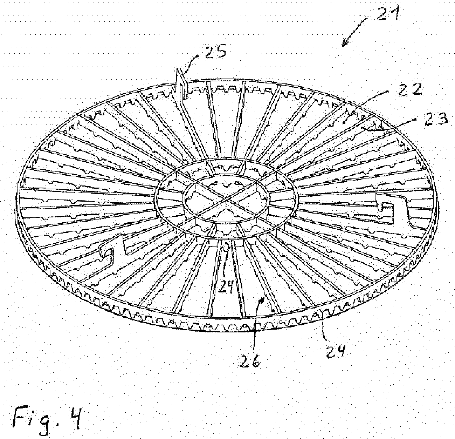

Ein erfindungsgemässer Pressdeckel 21 (Fig. 4) für eine runde Käseform 1 besteht aus einem Lochblech 22, bevorzugt ein Feinlochblech, zum Beispiel aus Conidur®, das in Form und Abmessungen dem inneren Querschnitt der Käseform 1 entspricht und einer, darauf befindlichen, versteifenden Rippenstruktur 23, 24 aus einem rostfreien Stahl, die dem Pressdeckel 21 die notwendige Steifigkeit für das Abpressen von Molke verleiht. Die Rippenstruktur 23, 24 ist an dünnen Stegen 26 unlösbar mit dem Lochblech 22 verbunden, insbesondere verschweisst. Bei der runden Käseform 1 erstrecken sich einzelne Rippen in Form von Streben 23 über den Mittelpunkt verlaufend bevorzugt strahlenförmig bzw. radial von der Längsachse der Form ausgehend über das Lochblech 22 bis zum Umfang. Sie kreuzen dabei ringförmig angeordnete Ringe resp. Querrippen 24 und sind mit diesen an den Kreuzungspunkten verbunden, wobei mehrere Ringe mit unterschiedlichen Durchmessern beabstandet voneinander vorgesehen sein können.

Die Käseformen können grundsätzlich auch aus einem Kunststoff bestehen.

### Bezugszeichenliste

- 1: Käseform
- 2: Rippenstruktur
- 3: Korb
- 4: Mantel
- 5: Boden
- 6: Kassette
- 7: Längsrippe
- 8: Ring
- 9: Längsachse
- 10: Mantelrippe
- 11: Mantelring
- 12: Käseform
- 13: Strebe
- 14: Zentrierzapfen
- 15: Antriebszentrierzapfen
- 16: Mantel
- 17: Längsrippe
- 18: Mantelrippe
- 19: Korb
- 20: Molkerand
- 21: Pressdeckel
- 22: Lochblech
- 23: Strebe
- 24: Querrippe, Ring
- 25: Öse
- 26: Steg

## Patentansprüche

1. Käseform, insbesondere eine Käseform zur Anordnung in einer Kassettenpresse oder dergleichen, wobei die Käseform zumindest einen Boden und einen Mantel (4, 16) aufweist und der Boden bis in den Übergangsbereich der äusseren Mantelwand hinein mit einer Rippenstruktur versehen ist, wobei die Form (1, 12) im Querschnitt rund bzw. zylindrisch oder eckig sein kann, **dadurch gekennzeichnet, dass** sich bei einer runden Käseform (1) Längsrippen (7) radial, von der Längsachse (9) ausgehend über den Boden (5) und fortgesetzt als Mantelrippen (10) bis in den Bereich der Mantelwand erstrecken, wobei die Längsrippen (7) im Bodenbereich mit Ringen (8) verbunden sind, und wobei mehrere Ringe (8) mit unterschiedlichen Durchmessern und beabstandet voneinander vorgesehen sind, während bei rechteckigen Käseformen (12) die Rippen zumindest parallel zueinander angeordnet sind.

2. Käseform nach Anspruch 1, **dadurch gekennzeichnet, dass** sie aus Metall oder Kunststoff, insbesondere einem rostfreien Stahl besteht.

3. Käseform nach Anspruch 1 oder 2, **dadurch gekennzeichnet, dass** bei einer runden Käseform ein innerer Ring (8) die Ausdehnung der Längsrippen (7) begrenzt und dass die Enden der Mantelrippen (10) mit einem Mantelring (11) verbunden sind.

4. Käseform nach Anspruch 1 oder 2, **dadurch gekennzeichnet, dass** eine eckige Form (12) Längsrippen (17) am Boden und Mantelrippen im Mantelbereich (18) aufweist, die bevorzugt parallel zueinander angeordnet sind, wobei quer dazu weitere, ebenfalls parallel zueinander angeordnete Längs- und Mantelrippen (17, 18) vorgesehen sind.

5. Käseform nach einem der Ansprüche 1 bis 4, **dadurch gekennzeichnet, dass** die Käseform einen Pressdeckel (21) aus einem Lochblech (22) umfasst, der in Form und Abmessungen dem inneren Querschnitt der Käseform (1, 12) entspricht, und auf dem eine versteifende Rippenstruktur (23, 24) angeordnet ist.

6. Käseform nach Anspruch 5, **dadurch gekennzeichnet, dass** die Rippenstruktur (23, 24) des Pressdeckels (21) Rippen in Form von Streben (23), die über den Mittelpunkt bevorzugt strahlenförmig bzw. radial von der Längsachse der Käseform (1, 12) ausgehend über das Lochblech (22) bis zum Umfang der Käseform (1, 12) verlaufen und dabei ringförmig angeordnete Ringe resp. Querrippen (24) kreuzen und an den Kreuzungspunkten mit diesen verbunden sind, wobei mehrere Ringe mit unterschiedlichen Durchmessern beabstandet voneinander vorgesehen sein können.

7. Käseform nach Anspruch 5 oder 6, **dadurch gekennzeichnet, dass** Lochblech (22) bevorzugt ein Feinlochblech ist und dass die Rippenstruktur (23, 24) des Pressdeckels (21) aus einem rostfreien Stahl gebildet ist.

8. Käseform nach einem der Ansprüche 5 bis 9, **dadurch gekennzeichnet, dass** die Rippenstruktur (23, 24) des Pressdeckels (21) an dünnen Stegen (26) unlösbar mit dem Lochblech (22) verbunden ist.

9. Käseform nach einem der Ansprüche 1 bis 8, **dadurch gekennzeichnet, dass** zumindest der Mantel (4, 16) der Käseform (1, 12) aus einem Lochblech besteht, das unterhalb eines Korbs (3) einen Molkerand (20) mit einer gröberen Lochung als der übrige Mantel (4, 16) aufweisen kann.

10. Käseform nach einem der Ansprüche 5 bis 8 und nach Anspruch 9, **dadurch gekennzeichnet, dass** das Lochblech (22) des Pressdeckels (21) und der Mantelwand der Käseform (1, 12) ein Feinlochblech ist.

## Claims

1. A cheese mold, in particular a cheese mold for arrangement in a cassette press or the like, wherein the cheese mold has at least one bottom and a shell (4, 16) and the bottom is provided with a rib structure up to the transitional region of the outer shell wall, wherein the mold (1 12) may be round or cylindrical or angular in cross-section, **characterized in that**, in a round cheese mold (1), longitudinal ribs (7) extend radially from the longitudinal axis (9) going out over the bottom (5) and continue as shell ribs (10) into the region of the shell wall, wherein the longitudinal ribs (7) are connected to rings (8) in the bottom region, and wherein a plurality of rings (8) are provided with different diameters and spaced from each other, while in rectangular cheese molds (12), the ribs are arranged at least parallel to each other.

2. The cheese mold according to claim 1, **characterized in that** it consists of metal or plastic, in particular a stainless steel.

3. The cheese mold according to claim 1 or 2, **characterized in that** in a round cheese mold, an inner ring (8) delimits the extent of the longitudinal ribs (7) and that the ends of the shell ribs (10) are connected to a shell ring (11).

4. The cheese mold according to claim 1 or 2, **characterized in that** an angular shape (12) has longitudinal ribs (17) on the bottom and shell ribs in the shell region (18), which are preferably arranged parallel to one another, wherein further longitudinal and lateral ribs (17, 18), also arranged parallel to each other, are provided transversely thereto.

5. The cheese mold according to one of claims 1 to 4, **characterized in that** the cheese mold comprises a press cover (21) made of a perforated plate (22) which corresponds in shape and dimensions to the inner cross-section of the cheese mold (1, 12), and is arranged on the one stiffening rib structure (23, 24) .

6. The cheese mold according to claim 5, **characterized in that** the rib structure (23, 24) of the press cover (21) ribs in the form of struts (23), which extend over the center preferably radially or radially from the longitudinal axis of the cheese mold (1, 12) going out over the perforated plate (22) to the periphery of the cheese mold (1, 12) and thereby cross annularly arranged rings or cross ribs (24) and are connected at the crossing points to these, wherein a plurality of rings with different diameters can be provided spaced from each other. [CO1]

7. The cheese mold according to claim 5 or 6, **characterized in that** perforated plate (22) is preferably a fine perforated plate and that the rib structure (23, 24) of the press cover (21) is formed of a stainless steel.

8. The cheese mold according to one of claims 5 to 9, **characterized in that** the rib structure (23, 24) of the press cover (21) is non-detachably connected to the perforated plate (22) on thin webs (26).

9. The cheese mold according to one of claims 1 to 8, **characterized in that** at least the shell (4, 16) of the cheese mold (1, 12) consists of a perforated plate, which, below a basket (3), may have a whey edge (20) with a coarser perforation than the rest of the shell (4, 16).

10. The cheese mold according to one of claims 5 to 8 and according to claim 9, **characterized in that** the perforated plate (22) of the press cover (21) and the shell wall of the cheese mold (1, 12) is a fine perforated plate.

## Revendications

1. Moule à fromage, notamment un moule à fromage destiné à être placé dans une presse à cassettes ou similaires, le moule à fromage comportant au moins un fond inférieur et une enveloppe (4, 16) et jusqu'à l'intérieur de la zone de passage de la paroi extérieure d'enveloppe, le fond inférieur étant muni d'une structure nervurée, le moule (1, 12) pouvant avoir une section transversale ronde ou cylindrique ou angulaire, **caractérisé en ce que** sur le moule à fromage (1) rond, des nervures longitudinales (7) s'étendent en direction radiale, en partant de l'axe longitudinal (9) par-dessus le fond inférieur (5) et en se poursuivant en tant que nervure d'enveloppe (10) jusque dans la région de la paroi d'enveloppe, sur la zone du fond inférieur, les nervures longitudinales (7) étant reliées avec des bagues (8) et plusieurs bagues (8) de différents diamètres et avec un écart mutuel étant prévues, alors que sur des moules à fromage (12) rectangulaires, les nervures sont au moins placées à la parallèle les unes des autres.

2. Moule à fromage selon la revendication 1, **caractérisé en ce qu'**il est constitué en matière plastique ou en métal, de préférence en acier inoxydable.

3. Moule à fromage selon la revendication 1 ou 2, caractérisé en ce sur un moule à fromage rond, une bague intérieure (8) délimite l'extension des nervures longitudinales (7) et en ce que les extrémités des nervures d'enveloppe (10) sont reliées avec une bague d'enveloppe (11).

4. Moule à fromage selon la revendication 1 ou 2, **caractérisé en ce qu'**un moule angulaire (12) comporte sur le fond inférieur des nervures longitudinales (17) et dans la zone d'enveloppe (18) des nervures d'enveloppe, qui sont placées de préférence à la parallèle les unes des autres, à la transversale de celles-ci étant prévues des nervures longitudinales et des nervures d'enveloppe (17, 18) également placées à la parallèle les unes des autres.

5. Moule à fromage selon l'une quelconque des revendications 1 à 4, **caractérisé en ce que** le moule à fromage comprend un couvercle de pressage (21) en une tôle perforée (22), qui par la forme et les dimensions correspond à la section transversale intérieure du moule à fromage (1, 12) et sur lequel est placée une structure nervurée (23, 24) de renfort.

6. Moule à fromage selon la revendication 5, **caractérisé en ce que** la structure nervurée (23, 24) du couvercle de pressage (21) comporte des nervures en forme de traverses (23) qui s'écoulent par-dessus le point médian, de préférence en forme de rayon ou en direction radiale à partir de l'axe longitudinal du moule à fromage (1, 12) par-dessus la tôle perforée (22) jusqu'à la périphérie du moule à fromage (1, 12) et croisent à cet effet des bagues, respectivement des nervures transversales (24) placées sous forme annulaire et sur les points de croisement sont reliées avec celles-ci, plusieurs bagues de différents diamètres pouvant être prévues avec un écart mutuel.

7. Moule à fromage selon la revendication 5 ou 6, **caractérisé en ce que** tôle perforée (22) est de préférence une tôle à perforations fines et **en ce que** la structure nervurée (23, 24) du couvercle de pressage (21) est conçue en un acier inoxydable.

8. Moule à fromage selon l'une quelconque des revendications 5 bis 9, **caractérisé en ce que** sur de minces barrettes (26), la structure nervurée (23, 24) du couvercle de pressage (21) est reliée de manière indissociable avec la tôle perforée (22).

9. Moule à fromage selon l'une quelconque des revendications 1 à 8, **caractérisé en ce qu'**au moins l'enveloppe (4, 16) du moule à fromage (1, 12) consiste dans une tôle perforée qui en-dessous d'un panier (3) peut comporter en outre un bord à petit lait (20) pourvu d'une perforation plus grossière que le reste de l'enveloppe (4, 16).

10. Moule à fromage selon l'une quelconque des revendications 5 à 8 et selon la revendication 9, **caractérisé en ce que** la tôle perforée (22) du couvercle de pressage (21) et de la paroi d'enveloppe du moule à fromage (1, 12) est une tôle à perforations fines.
